# EUROPEAN PATENT APPLICATION

(11) **EP 4 757 133 A1**
(43) Date of publication of application: **10.06.2026**
(21) Application number: 24866606.7
(22) Date of filing: 03.07.2024
(51) Int. Cl.: H02K 5/10

(54) **UNIT**

(30) Priority: 22.09.2023 JP 2023158474
(71) Applicant: Jatco Ltd., Shizuoka 417-8585 (JP)
(72) Inventor: YOKOYAMA, Kazuhiko, Fuji-shi, Shizuoka 417-8585 (JP); TANAKA, Yuuki, Fuji-shi, Shizuoka 417-0002 (JP); YAGI, Hidekazu, Fuji-shi, Shizuoka 417-8585 (JP); SHOICHI, Minoru, Fuji-shi, Shizuoka 417-8585 (JP); UEHARA, Hiroki, Fuji-shi, Shizuoka 417-8585 (JP)
(74) Representative: Hoefer & Partner Patentanwälte mbB
(86) International application number: PCT/JP2024/024042
(87) International publication number: WO 2025/062786

(57) **Abstract**

[Problems] To enable prevention of oil from entering an inlet of a breather when the breather is provided in a unit.

[Solutions] The unit includes the housing having the motor accommodating chamber accommodating the motor and the gear accommodating chamber accommodating the gear, wherein the housing constituting the motor accommodating chamber is formed with, at the position on the opposite side in the axial direction with respect to the gear accommodating chamber, the opening portion opening toward the opposite side in the axial direction from the side where the gear accommodating chamber is arranged, and ventilation to the breather is performed via the opening portion.

## Description

### TECHNICAL FIELD

The present invention relates to a unit.

### BACKGROUND ART

Patent Documents 1 to 4 disclose various arrangements of breathers that communicate between the inside and the outside of a housing (a case) to reduce a pressure difference between the inside and the outside of the housing.

### PRIOR ART DOCUMENT

### PATENT DOCUMENT

Patent Document 1: JP 2012-082930 A
Patent Document 2: JP 2016-019436 A
Patent Document 3: JP H8-065945 A
Patent Document 4: JP H9-182352 A

### SUMMARY OF INVENTION

### PROBLEMS TO BE SOLVED BY THE INVENTION

In a housing accommodating a speed reduction mechanism, which is mounted on a vehicle, it is generally practiced to provide breathers as described above. Here, oil for lubricating the inside of the housing flows to various places inside the housing as gears of a motive force transmission mechanism such as the speed reduction mechanism, a differential gear, or the like are rotated. Therefore, when the breather is provided in the unit, it has been necessary to prevent the oil from entering an inlet of the breather.

The present invention has been made in view of such a technical problem, and an object thereof is to enable prevention of oil from entering an inlet of a breather when the breather is provided in a unit.

### MEANS FOR SOLVING THE PROBLEM

A unit according to an aspect of the present invention includes a housing having a motor accommodating chamber accommodating a motor and a gear accommodating chamber accommodating a gear, wherein the housing constituting the motor accommodating chamber is formed with, at a position on the opposite side in the axial direction with respect to the gear accommodating chamber, an opening portion opening toward the opposite side in the axial direction from the side where the gear accommodating chamber is arranged, and ventilation to a breather is performed via the opening portion.

### EFFECT OF THE INVENTION

According to the above aspect, the airflow flowing from the gear accommodating chamber toward the breather, after moving over a distance spanning the entire length of the motor in the direction away from the gear accommodating chamber, is further reversed to the direction approaching the gear accommodating chamber and is introduced into the opening portion, and so, the intrusion of the oil into the opening portion can be effectively prevented, and the amount of oil entering the inlet of the breather can be reduced.

### BRIEF DESCRIPTION OF DRAWINGS

[FIG. 1] FIG. 1 is a diagram of a unit according to an embodiment of the present invention as viewed from above.
[FIG. 2] FIG. 2 is a side view of the unit with a first cover removed.
[FIG. 3] FIG. 3 is a sectional view taken along line III-III of FIG. 1.
[FIG. 4] FIG. 4 is an overhead view showing a peripheral portion of the breather enlarged and viewed obliquely in the sectional view of FIG. 3.

### DESCRIPTION OF EMBODIMENTS

A unit 100 according to an embodiment of the present invention will be described below with reference to the attached drawings.

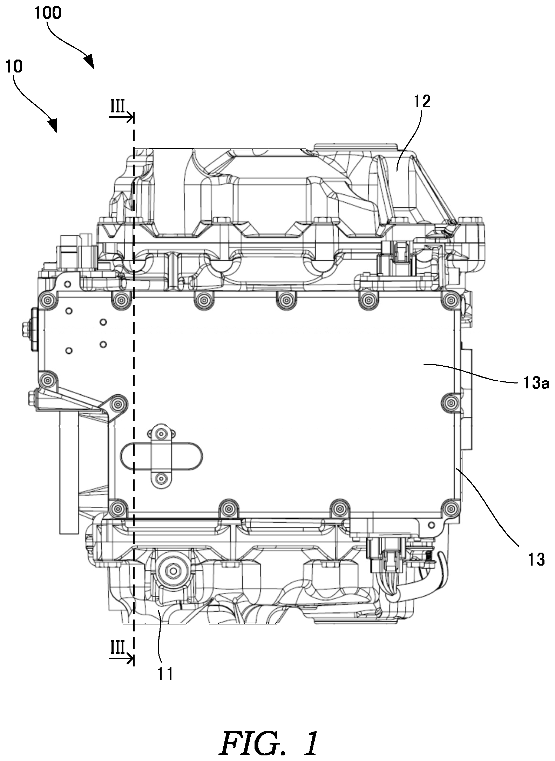

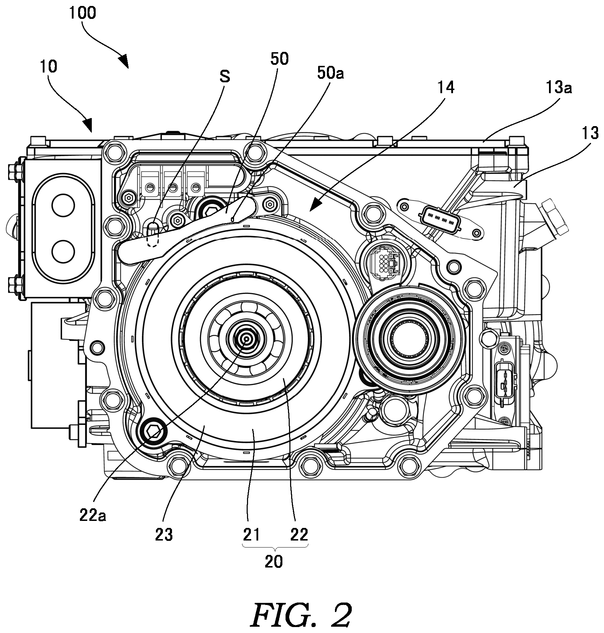

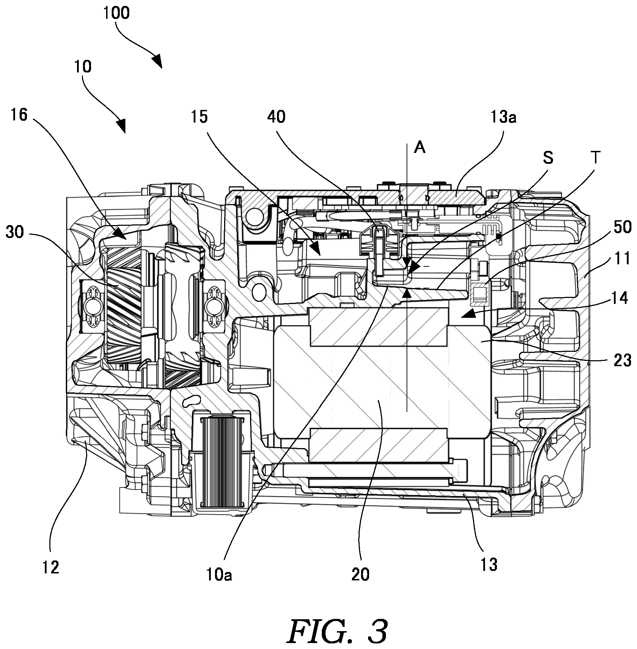

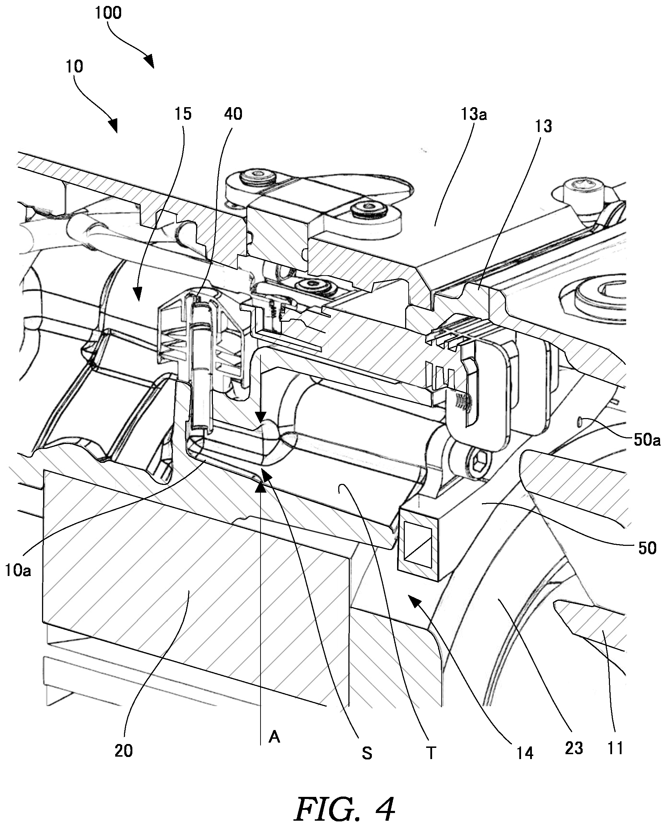

FIG. 1 is a diagram of the unit 100 according to this embodiment as viewed from above. FIG. 2 is a side view of the unit with the first cover removed. FIG. 3 is a sectional view taken along line III-III of FIG. 1. FIG. 4 is an overhead view showing the peripheral portion of the breather enlarged and viewed obliquely in the sectional view of FIG. 3. In FIG. 1, the direction orthogonal to the paper surface corresponds to the direction of gravity. In FIGs. 2 to 4, the up-down direction corresponds to the direction of gravity.

Regarding the term "unit", the unit can also be referred to as, for example, a motor unit (a unit including at least a motor) or a motive force transmission device (a device including at least a motive force transmission mechanism). The motor is a rotating electric machine having an electric motor function and/or a generator function (at least one of the electric motor function or the generator function). The motive force transmission mechanism is, for example, a gear mechanism and/or a differential gear mechanism. The device (unit) including the motor and the motive force transmission mechanism is included in both concepts of a motor unit and a motive force transmission device. The line III-III in FIG. 1 is a line parallel to the axial direction of the motor and the motive force transmission mechanism.

As shown in FIG. 1, the unit 100 includes a housing 10 that has a first cover 11, a second cover 12, and a case 13. The unit 100 is mounted on a vehicle, and the vehicle is an electric vehicle. The first cover 11 closes an opening of the cylindrical case 13 from one side in the axial direction (the lower side in FIG. 1), and the second cover 12 closes an opening of the case 13 from the other side in the axial direction. In addition, the case 13 has a third cover 13a that closes an opening on an upper side in the direction of gravity.

The unit 100 further includes a motor 20, an inverter (not shown), a speed reduction mechanism 30, and a differential gear (not shown). As shown in FIGs. 2 to 4, the case 13 of the housing 10 has a motor accommodating chamber 14 that accommodates the motor 20 and an inverter accommodating chamber 15 that accommodates the inverter. In addition, a gear accommodating chamber 16 is formed in the second cover 12 to accommodate the speed reduction mechanism 30 and the differential gear (see FIG. 3). The inverter is electrically connected to the motor 20 and a battery (not shown).

As shown in FIG. 2, the motor 20 has a stator 21 that is provided and fixed to the case 13, and a rotor 22 that is rotatable on the inner side of the stator 21, and the motor 20 constitutes a drive source of the vehicle.

The unit 100 has oil inside the housing 10, and the oil is supplied, for example, to the speed reduction mechanism 30 and the differential gear inside the second cover 12 to lubricate gears inside the speed reduction mechanism 30 and the differential gear. In addition, the oil is also supplied, for example, to the motor 20 inside the case 13 to lubricate the motor 20. Therefore, the oil lubricating the motor 20 exists in a state of liquid, foam, or atomized mist in the motor accommodating chamber 14.

As shown in FIGs. 2 to 4, the housing 10 constituting the motor accommodating chamber 14 has an opening portion S formed therein. The width of the opening portion S is a range between arrows A shown in FIG. 3. As shown in FIG. 3, the opening portion S in the housing 10 is formed at a position on the opposite side in the axial direction with respect to the gear accommodating chamber 16. In addition, the opening portion S opens toward the opposite side in the axial direction from the side of the housing 10 where the gear accommodating chamber 16 is arranged. In other words, an airflow from the gear accommodating chamber 16 to the opening portion S needs to reverse further to the direction approaching the gear accommodating chamber 16 after the airflow has moved over a distance spanning the entire length of the motor 20 in the direction away from the gear accommodating chamber 16. As described above, because it is configured such that the airflow from the gear accommodating chamber 16 needs to be reversed to the opposite direction on the path to to the opening portion S, even if the oil is scattered from the gear accommodating chamber 16 by the rotation of the gears of the speed reduction mechanism 30 and the differential gear, an amount of oil reaching the opening portion S can be reduced.

In the housing 10, a recessed portion 10a is formed so as to be recessed from the opening portion S toward the gear accommodating chamber 16. In addition, in the motor accommodating chamber 14, a bottom surface portion T is formed at the position on the opposite side in the axial direction with respect to the gear accommodating chamber 16 from the opening portion S, that is, at the position on a coil end 23 side.

As shown in FIGs. 3 and 4, in the inverter accommodating chamber 15, a breather 40 is provided to reduce a pressure difference by causing the inside of the sealed motor accommodating chamber 14 and the inverter accommodating chamber 15 to communicate with each other. An inlet of the breather 40 is located closer to the gear accommodating chamber 16 side than the opening portion S of the motor accommodating chamber 14, and is provided in the recessed portion 10a so as to open into the motor accommodating chamber 14 on the gear accommodating chamber 16 side of the recessed portion 10a, and thereby, ventilation to the breather 40 is performed via the opening portion S.

In the motor accommodating chamber 14, the coil end 23 of the motor 20 is located on the opposite side in the axial direction with respect to the gear accommodating chamber 16. An oil tube 50 is provided above the coil end 23 in the direction of gravity. In the axial direction view, the oil tube 50 is arranged at a position between the opening portion S and the central axis 22a of the rotor 22 of the motor 20 (see FIG. 2). Therefore, even when the oil is scattered toward the opening portion S by the rotation of the rotor 22, the oil tube 50 can block the scattered oil, and an amount of oil entering the opening portion S can be reduced.

As shown in FIG. 3, the oil tube 50 is formed to have a substantially polygonal cross section (for example, a rectangular shape). As described above, because the cross section of the oil tube 50 has a substantially polygonal shape, compared to a case in which the cross section is circular, it is possible to easily block, across a plane, a flow of the oil toward the opening portion S and the bottom surface portion T, and it is possible to easily suppress the oil from flowing into the opening portion S.

On a side portion of the oil tube 50, an oil supply port 50a for supplying the oil inside the oil tube 50 to the motor 20 is formed. In addition, similarly, an oil supply port (not shown) is also formed on a lower bottom side portion of the oil tube 50 in the direction of gravity so that the oil inside thereof can flow to the motor 20. The oil flowing out from the oil supply port 50a and the like cools and lubricates the motor 20 (particularly the coil end 23). In addition, the oil supply port 50a and the like open in the direction away from the opening portion S side, that is, toward the lower side in the direction of gravity or toward the opposite side in the axial direction with respect to the gear accommodating chamber 16 (the front side of the paper surface in FIG. 2), and are formed on the coil end 23 side of the motor 20. Therefore, it is possible to suppress the oil flowing out from the oil tube 50 from being guided to the opening portion S.

In addition, as shown by a broken line in FIG. 2, the oil tube 50 has a portion that overlaps with the opening portion S in the axial direction. As described above, because the oil tube 50 overlaps with a part of the opening portion S, it is possible to easily block the oil moving in the axial direction with the oil tube 50, and the amount of oil entering the opening portion S can be reduced.

Main operational advantages of the unit 100 according to the embodiment of the present invention will be collectively described below.
(1) The unit 100 includes the housing 10 having the motor accommodating chamber 14 accommodating the motor 20 and the gear accommodating chamber 16 accommodating the gears of the speed reduction mechanism 30 and the differential gear. The housing 10 constituting the motor accommodating chamber 14 is formed with, at the position on the opposite side in the axial direction with respect to the gear accommodating chamber 16, the opening portion S opening toward the opposite side in the axial direction from the side where the gear accommodating chamber 16 is arranged, and the ventilation to the breather 40 is performed via the opening portion S.
   According to this configuration, the airflow flowing from the gear accommodating chamber 16 toward the breather 40, after moving over a distance spanning the entire length of the motor 20 in the direction away from the gear accommodating chamber 16, is further reversed to the direction approaching the gear accommodating chamber 16 and is introduced into the opening portion S, and so, the intrusion of the oil into the opening portion S can be effectively prevented, and the amount of oil entering the inlet of the breather 40 can be reduced.
(2) The unit has the oil tube 50 for supplying the oil to the coil end 23 of the motor 20 located on the opposite side in the axial direction with respect to the gear accommodating chamber 16, wherein, in the axial direction view, the oil tube 50 is arranged so as to be sandwiched between the opening portion S and the central axis 22a of the rotor 22 of the motor 20.
   According to this configuration, because the oil tube 50 blocks the oil scattered toward the opening portion S by the rotation of the rotor 22, the amount of oil entering the opening portion S can be reduced.
(3) The unit has the oil tube 50 for supplying the oil to the coil end 23 of the motor 20 located on the opposite side in the axial direction with respect to the gear accommodating chamber 16, and the oil tube 50 has the portion overlapping with the opening portion S in the axial direction.
   According to this configuration, because the oil tube 50 blocks the oil moving toward the opening portion S from the axial direction, the amount of oil entering the opening portion S can be reduced.
(4) The oil supply port 50a of the oil tube 50 opens toward the direction away from the opening portion S.

According to this configuration, because the oil is ejected in the direction away from the opening portion S, it is possible to make it difficult for the oil to enter the opening portion S.

Although the embodiment of the present invention has been described in the above, the above-mentioned embodiment merely illustrates a part of application examples of the present invention, and the technical scope of the present invention is not intended to be limited to the specific configurations of the above-described embodiment.

### DESCRIPTION OF REFERENCE SIGNS

100: unit
10: housing
14: motor accommodating chamber
16: gear accommodating chamber
20: motor
22: rotor
22a: central axis
23: coil end
30: speed reduction mechanism (gear)
40: breather
50: oil tube
50a: oil supply port
S: opening portion

## Claims

1. A unit comprising a housing having a motor accommodating chamber accommodating a motor and a gear accommodating chamber accommodating a gear, wherein
the housing constituting the motor accommodating chamber is formed with, at a position on an opposite side in an axial direction with respect to the gear accommodating chamber, an opening portion opening toward the opposite side in the axial direction from a side where the gear accommodating chamber is arranged, and
ventilation to a breather is performed via the opening portion.

2. The unit according to claim 1, further comprising
an oil tube for supplying oil to a coil end of the motor located on the opposite side in the axial direction with respect to the gear accommodating chamber, wherein
in an axial direction view, the oil tube is arranged so as to be sandwiched between the opening portion and a central axis of a rotor of the motor.

3. The unit according to claim 1, further comprising
an oil tube for supplying oil to a coil end of the motor located on the opposite side in the axial direction with respect to the gear accommodating chamber, wherein
the oil tube has a portion overlapping with the opening portion in the axial direction.

4. The unit according to claim 2 or 3, wherein
an oil supply port of the oil tube opens towards a direction away from the opening portion.
